(19)

Europäisches
Patentamt
European
Patent Office
Office européen
des brevets

(11) **EP 4 583 420 A1**

(12) **EUROPEAN PATENT APPLICATION**
published in accordance with Art. 153(4) EPC

(43) Date of publication:
**09.07.2025 Bulletin 2025/28**

(21) Application number: **23858706.7**

(22) Date of filing: **28.04.2023**

(51) International Patent Classification (IPC):
**H04B 7/0456** (2017.01)

(52) Cooperative Patent Classification (CPC):
**H04B 7/0456; H04B 17/391; H04L 5/00; H04L 25/02**

(86) International application number:
**PCT/CN2023/091636**

(87) International publication number:
**WO 2024/045666 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 CN 202211058844**

(71) Applicant: **ZTE Corporation
Shenzhen, Guangdong 518057 (CN)**

(72) Inventors:
• **XIA, Shuqiang**
**Shenzhen, Guangdong 518057 (CN)**
• **LI, Lei**
**Shenzhen, Guangdong 518057 (CN)**
• **ZHANG, Zonghui**
**Shenzhen, Guangdong 518057 (CN)**
• **WANG, Zhongbin**
**Shenzhen, Guangdong 518057 (CN)**

(74) Representative: **Aipex B.V.
Vestdijk 51
5611 CA Eindhoven (NL)**

(54) **CHANNEL RECONSTRUCTION METHOD, COMMUNICATION NODE, AND STORAGE MEDIUM**

(57)    Provided are a channel reconstruction method, a communication node, and a storage medium. The channel reconstruction method includes: acquiring an integrated sensing and communication, ISAC, signal and transmitting the ISAC signal; receiving an echo signal and a reference signal, where the echo signal is a signal scattered by a scatterer based on the ISAC signal, and the reference signal is a signal fed back by a second communication node based on the ISAC signal; and performing channel reconstruction according to the echo signal and the reference signal.

```
┌──────────────────────────────────────────────────────────────┐
│   Acquire an ISAC signal and transmit the ISAC signal          │ ∿ S110
└──────────────────────────────────────────────────────────────┘
                               │
                               ▼
┌──────────────────────────────────────────────────────────────┐
│   Receive an echo signal and a reference signal, where the echo│
│ signal is a signal scattered by a scatterer based on the ISAC  │ ∿ S120
│ signal, and the reference signal is a signal fed back by a     │
│ second communication node based on the ISAC signal             │
└──────────────────────────────────────────────────────────────┘
                               │
                               ▼
┌──────────────────────────────────────────────────────────────┐
│ Perform channel reconstruction according to the echo signal and│ ∿ S130
│                   the reference signal                         │
└──────────────────────────────────────────────────────────────┘
```

**FIG. 2**

EP 4 583 420 A1

**Description**

TECHNICAL FIELD

The present disclosure relates to the field of communications, for example, a channel reconstruction method, a communication node, and a storage medium.

BACKGROUND

Most of the research on channel reconstruction is based on the fact that the downlink channel state information (CSI) estimation can be perfectly and losslessly fed back to the base station (BS). However, in actual cellular communication systems, the user equipment (UE) can feed back only quantized CSI estimation such as a precoding matrix indicator (PMI) and a channel quality indicator (CQI). In the related art, attempts are made to decompose the channel so that through estimation, the BS obtains part of the channel path information (such as the path delay and angle) from the uplink reference signal sent by the UE, the BS sends a downlink reference signal, and the UE performs estimation on the downlink CSI from the received downlink reference signal and feeds back part of the CSI (such as the path gain). However, this technology requires the UE and BS to send uplink and downlink reference signal signals simultaneously and perform estimation, bringing in new overhead. Moreover, in this manner, it is assumed that the UE can perfectly feed back the estimation amount, which is often difficult to satisfy in actual systems.

SUMMARY

An embodiment of the present disclosure provides a channel reconstruction method. The channel reconstruction method is applied to a first communication node. The channel reconstruction method includes the following.

An integrated sensing and communication (ISAC) signal is acquired and the ISAC signal is transmitted; an echo signal and a reference signal are received, where the echo signal is a signal scattered by a scatterer based on the ISAC signal, and the reference signal is a signal fed back by a second communication node based on the ISAC signal; and channel reconstruction is performed according to the echo signal and the reference signal.

An embodiment of the present disclosure provides a communication node. The communication node includes a processor configured to perform the method of any preceding embodiment when executing a computer program.

An embodiment of the present disclosure further provides a computer-readable storage medium storing a computer program which, when executed by a processor, causes the processor to perform the method of any preceding embodiment.

BRIEF DESCRIPTION OF DRAWINGS

FIG. 1 is a diagram of a scenario of downlink communication between an access network device and a terminal device according to an embodiment.
FIG. 2 is a flowchart of a channel reconstruction method according to an embodiment.
FIG. 3 is a flowchart of another channel reconstruction method according to an embodiment.
FIG. 4 is a correlation comparison diagram of three channel reconstruction methods according to an embodiment.
FIG. 5 is a comparison diagram of normalized mean square errors (NMSEs) with common phase rotation of three channel reconstruction methods according to an embodiment.
FIG. 6 is a diagram illustrating the structure of a channel reconstruction apparatus according to an embodiment.
FIG. 7 is a diagram illustrating the structure of a BS according to an embodiment.

DETAILED DESCRIPTION

The embodiments described herein are intended to explain the present disclosure. Embodiments of the present disclosure are described hereinafter in conjunction with drawings.

With the deployment of fifth-generation mobile communication technology (5G) and even the advent of the Beyond-5G (B5G) era, the deployment of large-scale antenna arrays at a BS gradually becomes a trend. In conjunction with the application of multi-antenna technologies such as beamforming and precoding, the overall rate of the communication system can be greatly improved. However, BS-side multi-antenna technologies and the allocation of communication resources such as power and bandwidth usually depend on accurate CSI. In actual systems, the acquisition of the CSI of the UE downlink channel by the BS often requires complex signal processing and a large amount of feedback overhead. For example, in a time-division duplexing (TDD) system, the BS may use the reciprocity of the uplink and downlink to obtain the CSI of the downlink channel; in a frequency-division duplexing (FDD) system, since no reciprocity exists, the BS needs to send a reference signal, and then the UE performs estimation on the downlink CSI based on the received reference signal and feeds the estimated downlink CSI back to the BS via the uplink. Therefore, the acquisition of the downlink CSI in the FDD system depends on the feedback of the UE. As the number of antennas increases and the channel dimension increases, the CSI feedback overhead also increases. How to reduce the CSI feedback overhead in the FDD large-scale antenna system becomes an important technical issue.

Most of the research on channel reconstruction is based on the fact that downlink CSI estimation can be perfectly and losslessly fed back to the BS. However, in actual cellular communication systems, the UE can feed back only quantized CSI estimation such as the PMI and the CQI. In one study, attempts are made to decompose the channel so that through estimation, the BS obtains part of the channel path information (such as the path delay and angle) from the uplink reference signal sent by the UE, the BS sends a downlink reference signal, and the UE performs estimation on the downlink CSI from the received downlink reference signal and feeds back part of the CSI (such as the path gain). However, this technology requires the UE and BS to send uplink and downlink reference signals simultaneously and perform estimation, bringing in new overhead. Moreover, in this manner, it is assumed that the UE can perfectly feed back the estimation amount, which is often difficult to satisfy in actual systems. Another study proposes a channel reconstruction solution based on Type I codebook PMI and CQI feedback. In this solution, the channel is decomposed into two parts: a channel spatial basis matrix and unknown parameters, the basis matrix is constructed through real-time feedback/historical CSI data of surrounding neighboring UEs, and channel reconstruction is achieved in conjunction with UE feedback information. However, due to the lack of the active sensing design in this study, in this manner, when the neighboring UEs do not exist or lack historical data, the construction of the basis matrix cannot be achieved, and the entire channel still needs to be reconstructed, so a large amount of overhead caused by reference signal and feedback overhead cannot be avoided.

Three main channel reconstruction methods are provided below.

1. Channel reconstruction technology based on the consistency of some parameters of the uplink and downlink paths is provided.

In this technology, the channel is decomposed into the gain, angle, and delay parameters of the transmission paths. Based on the angle and delay consistency of the uplink and downlink paths, the BS performs estimation on the angle and delay from the uplink reference signal sent by the UE and sends the estimation values to the UE. At the same time, the BS sends a downlink reference signal to the UE. Through estimation, the UE obtains the path gain from the downlink reference signal in conjunction with the received angle and delay estimation values and sends the path gain back to the BS so that the BS completes channel reconstruction based on the angle and delay obtained by performing uplink estimation, and gain fed back by the user.

However, this technology requires the BS and UE to send downlink and uplink reference signal signals respectively for path parameter estimation. At the same time, the BS needs to send the angle and delay information obtained through estimation to the UE, and the UE sends the path gain estimation back to the BS. Depending on additional uplink channel estimation brings in new overhead, and the path parameter estimation information backhaul design is not applicable to the codebook-based CSI feedback mechanism of the system.

2. Channel reconstruction technology based on the spatial consistency of neighboring UE channels is provided.

In this technology, the BS transmits a precoded downlink reference signal, and the UE calculates the PMI and CQI based on channel estimation and feeds the PMI and CQI back to the BS via the uplink. When BS reconstructs the channel based on the PMI and CQI, the BS decomposes the channel to be reconstructed into the product of the channel spatial basis matrix and the unknown parameter vector. The basis matrix is calculated by the CSI feedback of the neighboring users, and the unknown parameter vector is obtained by solving the phase extraction problem.

However, due to the lack of the active sensing design in this technology, the calculation of the channel basis matrix depends on the real-time feedback/historical CSI of neighboring UEs. When no neighboring UEs exist at the current occasion, the number of neighboring UEs is insufficient, or the timeliness of the historical CSI feedback from neighboring UEs is poor, the channel basis matrix has a relatively large calculation error or is even impossible to calculate. When the basis matrix error is relatively large, the accuracy of the reconstructed channel decreases, while the lack of the basis matrix causes the channel reconstruction to degenerate to full channel reconstruction, resulting in a large amount of overhead.

3. Full channel reconstruction technology based on the UE PMI and CQI feedback is provided.

In this technology, the BS transmits a precoded downlink reference signal. At the same time, according to the received signals, the UE estimates the effective channel, calculates the PMI and CQI, and feeds the PMI and CQI back to the BS via the uplink. The BS reconstructs the channel by solving the phase extraction problem based on the received PMI and CQI.

However, this technology requires a large amount of downlink reference signal and uplink feedback overhead, which is very detrimental to the overall communication capacity of the system.

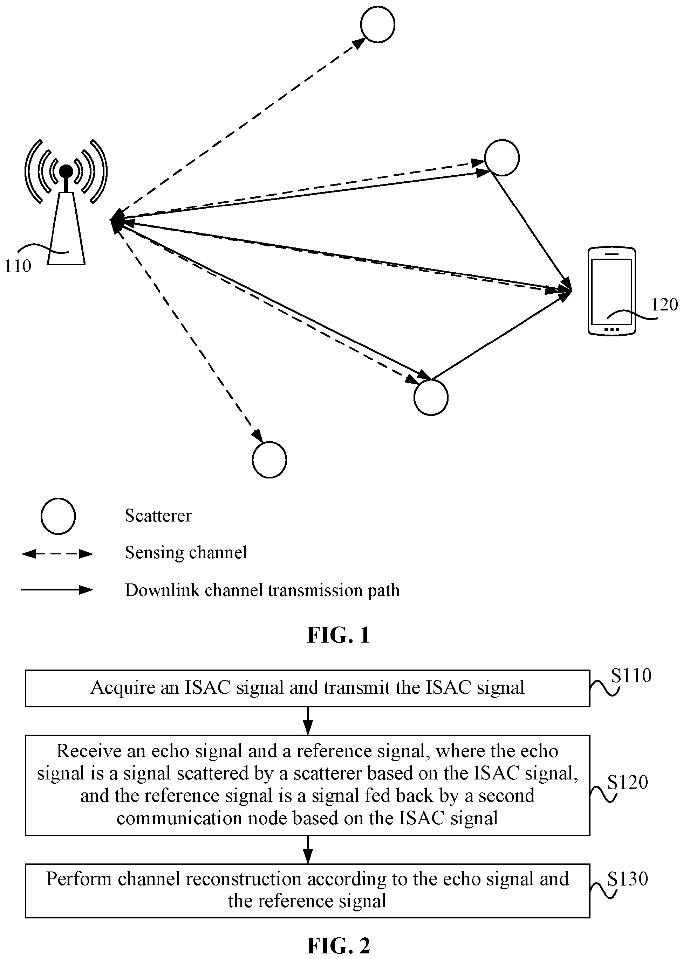

The channel reconstruction method of the present disclosure may be applied to various wireless communication systems, for example, a long-term evolution (LTE) system, a 4th-generation (4G) system, a 5G system, a B5G system, an LTE-5G hybrid architecture system, a 5G New Radio (NR) system, and a new communication system such as a 6th-generation (6G) system in future communications. FIG. 1 is a diagram of a scenario of downlink communication between an access network device and a terminal device according to an embodiment. As shown in FIG. 1, multiple scatterers (such as buildings, trees, and mobile targets) exist in the entire transmission environment. Signals sent by an access network device 110 pass through some of the scatterers to reach a terminal device 120. The transmission paths passing through these scatterers form a downlink channel from the access network device 110 to the terminal device 120. At the same time, the signals transmitted by the access network device 110 are scattered by the scatterers to generate echo signals which are received by the access network device 110. The access network device 110 can estimate the angle parameters of the scatterers based on the echo signals, thereby obtaining the parameter (such as angle) information of the scatterers in the paths of the downlink channel from the access network device 110 to the terminal device 120. This part of information may be used for constructing a downlink channel spatial matrix, and in conjunction with the PMI and CQI information fed back by the terminal device 120, the reconstruction of the downlink channel can be achieved at the access network device 110 side.

The access network device 110 is an access device through which the terminal device 120 accesses the wireless communication system in a wireless manner. The access network device 110 may be, for example, a BS, an evolved NodeB (eNB or eNodeB) in long-term evolution advanced (LTEA), a transmission reception point (TRP), a BS or next-generation NodeB (gNB) in a 5G mobile communication system, a BS in a future mobile communication system, or an access node in a Wireless Fidelity (Wi-Fi) system. The BS may be, for example, a macro BS, a micro BS, a home BS, a wireless remote station, a router, a Wi-Fi device, a primary-cell device, a secondary-cell device, another network device, or a location management function (LMF) device. The access network device 110 may also be a module or unit for implementing some functions of the BS, for example, a central unit (CU) or a distributed unit (DU). Embodiments of the present disclosure do not limit technologies and forms used by the access network device. The access network device may be referred to as a BS.

The terminal device 120 may be a wireless transceiving device that may be deployed on land (for example, indoor or outdoor, handheld, worn, or in-vehicle), deployed on the water surface (such as a ship), or deployed in the air (for example, aircraft, balloon, or satellite). The terminal device 120 may be, for example, a user equipment (UE), a mobile phone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, an industrial control terminal, a wireless terminal in self-driving, a wireless terminal in remote medicine, a wireless terminal in a smart grid, a wireless terminal in transportation safety, a wireless terminal in a smart city, a wireless terminal in a smart home, an IoT node in the Internet of Things, a vehicle-mounted communication apparatus in vehicle-to-everything, an entertainment or gaming device or system, or a global positioning system (GPS) device. Embodiments of the present disclosure do not limit technologies and forms used by the terminal device. The terminal device may be referred to as a terminal.

In the embodiments of the present disclosure, a channel reconstruction method, a communication node, and a storage medium that can be operated in the preceding communication scenario are provided so that the dependence on neighboring UEs can be eliminated through the active sensing design of ISAC without additional uplink estimation, high-accuracy channel reconstruction of the downlink can be achieved, and the downlink reference signal overhead and uplink feedback overhead can be effectively reduced.

The channel reconstruction method, the communication node, and the technical effects are described below.

FIG. 2 is a flowchart of a channel reconstruction method according to an embodiment. As shown in FIG. 2, the method of this embodiment is applied to a first communication node. In this example, the first communication node (also referred to as a first communication node device or a first node) is an access network device, and the second communication node (also referred to as a second communication node device or a second node) is a terminal device. In the following embodiments, the first communication node is denoted as the BS, and the second communication node is denoted as the UE. The method includes S110, S120, and S130.

In S110, an ISAC signal is acquired and the ISAC signal is transmitted.

In an example, before S110 is performed, the system may be initialized to set the maximum number of transmissions of the ISAC signal to T. Correspondingly, the maximum number of feedbacks of the reference signal is also T, where T is a positive integer. The number of frame signals of the ISAC signal transmitted by the BS in a single time satisfies $L \geq N_{B1}$, thereby satisfying the channel estimation requirements of the UE, where $N_{B1}$ denotes the number of transmit antennas of the BS. The number of frame symbols L of the ISAC signal corresponds to the number of reference signal sequence symbols, and the number of transmit antennas of the BS may be understood as the channel dimension.

In an embodiment, the initialization may set the transmit power constraint $P_T$ of the BS, the Type-I codebook is denoted as $U = \{u_1, ..., u_{n_{cw}}\}$, and the regularization term weight $\alpha > 0$.

In an embodiment, the method of the BS acquiring the ISAC signal may include: generating an orthogonal transmit signal; and precoding the orthogonal transmit signal using a precoding matrix to obtain the ISAC signal.

In an embodiment, different precoding matrices are used for ISAC signals with different numbers of transmissions. The precoding matrix is constructed using a random complex Gaussian matrix or a discrete Fourier transform (DFT) matrix.

In S120, an echo signal and a reference signal are received, where the echo signal is a signal scattered by a scatterer based on the ISAC signal, and the reference signal is a signal fed back by a second communication node based on the ISAC signal.

In an embodiment, after the BS sends the ISAC signal, the UE may feed back the reference signal to the BS based on the ISAC signal. Therefore, the current number of transmissions of the ISAC signal is the same as the current number of feedbacks of the reference signal. The echo signal generated by the ISAC signal scattered by the scatterer is also received by the BS.

In S130, channel reconstruction is performed according to the echo signal and the reference signal.

In an embodiment, if the current number of transmissions of the ISAC signal and the current number of feedbacks of the reference signal are both equal to t and t is a positive integer less than or equal to T, then the method for the BS in S120 to perform the channel reconstruction according to the echo signal and the reference signal may include: performing parameter estimation on an echo signal set to obtain angle information of the scatterer, where the echo signal set includes an echo signal corresponding to an ISAC signal transmitted for the *t*-th time or includes all echo signals corresponding to all ISAC signals transmitted from the first time to the t-th time; constructing a spatial basis matrix according to the angle information of the scatterer; and performing the channel reconstruction according to the spatial basis matrix and a reference signal set, where the reference signal set includes a reference signal fed back by the second communication node for the t-th time or includes all reference signals fed back by the second communication node from the first time to the t-th time.

In an embodiment, the reference signal includes a PMI and a CQI.

In an embodiment, if the second communication node includes one antenna, the reference signal includes one PMI and one CQI; if the second communication node includes $N_u$ antennas, the reference signal includes one PMI and one CQI or the reference signal includes $N_u$ PMIs and $N_u$ CQIs, where $N_u$ is a positive integer greater than 1.

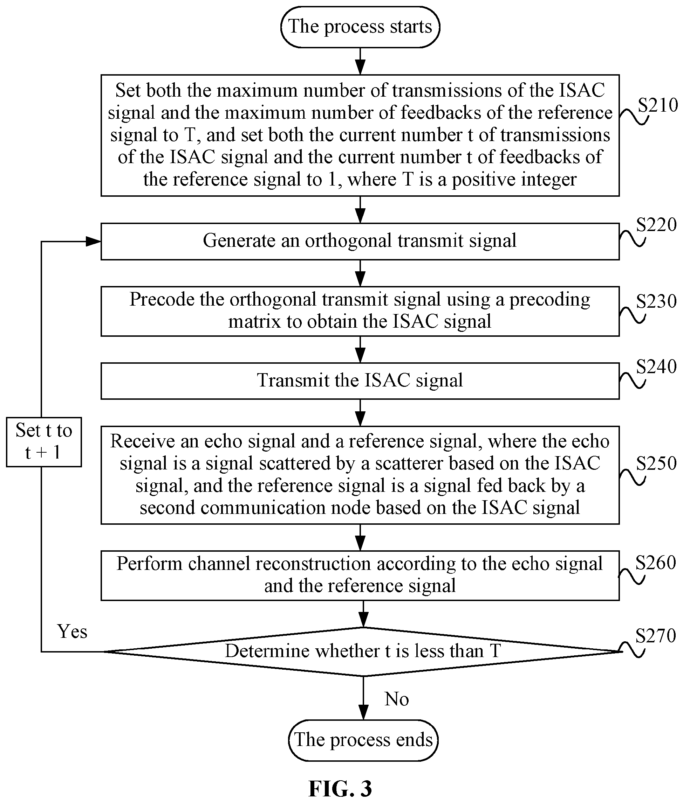

FIG. 3 is a flowchart of another channel reconstruction method according to an embodiment. As shown in FIG. 3, a specific embodiment of channel reconstruction is provided. In the following embodiments, the first communication node is denoted as the BS, and the second communication node is denoted as the UE. The method includes S210, S220, S230, S240, S250, S260, and S270.

In S210, the maximum number of transmissions of the ISAC signal and the maximum number of feedbacks of the reference signal are both set to T, and the current number t of transmissions of the ISAC signal and the current number t of feedbacks of the reference signal are both set to 1, where T is a positive integer.

When the system is initialized, the maximum number of transmissions of the ISAC signal may be set to T. Accordingly, the maximum number of feedbacks of the reference signal is also set to T, where T is a positive integer. The number of frame signals of the ISAC signal transmitted by the BS in a single time satisfies $L \geq N_{B1}$, thereby satisfying the channel estimation requirements of the UE, where $N_{B1}$ denotes the number of transmit antennas of the BS. The number of frame symbols L of the ISAC signal corresponds to the number of reference signal sequence symbols, and the number of transmit antennas of the BS may be understood as the channel dimension. The initialization may set the transmit power constraint $P_T$ of the BS, the Type-I codebook is $U = \{u_1, ..., u_{n_{cw}}\}$, and the regularization term weight $\alpha > 0$.

In S220, an orthogonal transmit signal is generated.

In an embodiment, the orthogonal transmit signal may be denoted as $S_t \in C^{N_{B1} \times L}$, t = 1, ..., T, which satisfies

$$\frac{1}{L} S_t S_t^H = I_{N_{B1}}$$

.

In S230, the orthogonal transmit signal is precoded using a precoding matrix so that the ISAC signal is obtained.

In an embodiment, the precoding matrix may be denoted as $W_t$. After the orthogonal transmit signal $S_t$ is precoded using the precoding matrix $W_t$, the obtained ISAC signal satisfies $X_t = WtSt$.

Different precoding matrices are used for ISAC signals with different numbers of transmissions.

In an embodiment, the precoding matrix $W_t$ may be constructed using a random complex Gaussian matrix $W_t \sim CN(0, sl)$, where $s > 0$ and s denotes an adjustable parameter to satisfy the power constraint; or the precoding matrix $W_t$ may be constructed using a DFT matrix. When some information about the scatterers in the surrounding environment is known, the precoding matrix $W_t$ may be designed.

In an embodiment, the transmit signal power of the ISAC signal satisfies $\|X_t\|_F^2 \leq P_T$ .

In S240, the ISAC signal is transmitted.

The BS is equipped with an ISAC module for transmitting the ISAC signal.

In S250, an echo signal and a reference signal are received, where the echo signal is a signal scattered by a scatterer based on the ISAC signal, and the reference signal is a signal fed back by a second communication node based on the ISAC signal.

It is assumed that the set of scatterers around the BS is S, and the set of scatterers that the downlink channel from the BS to the UE passes through is $S_c \in S$. The ISAC module installed on the BS may send the ISAC signals and perform environment sensing/scatterer parameter estimation based on the echo signals. The BS is equipped with a uniform linear array formed by $N_{B1}$ transmit antennas and $N_{B2}$ receiving antennas. Assuming that the UE has a single antenna, the sensing channel may be modeled as below.

$$H_s = \sum_{i \in S} g_i a(\theta_i) b(\theta_i)^H \in C^{N_{B2} \times N_{B1}} \qquad (1)$$

$g_i$ and $\theta_i$ denote the sensing channel gain and angle of the i-th scatterer, respectively. $a(\theta_i)$ and $b(\theta_i)$ correspond to the received and sent guiding vectors, respectively. $a(\theta_i)$ and $b(\theta_i)$ are expressed as below.

$$a(\theta_i) = \left[1, e^{-\frac{j2\pi d}{\lambda}\sin(\theta_i)}, \dots, e^{-\frac{j2\pi(N_{B2}-1)d}{\lambda}\sin(\theta_i)}\right]^T \in C^{N_{B2}} \qquad (2)$$

$$b(\theta_i) = \left[1, e^{-\frac{j2\pi d}{\lambda}\sin(\theta_i)}, \dots, e^{-\frac{j2\pi(N_{B1}-1)d}{\lambda}\sin(\theta_i)}\right]^T \in C^{N_{B1}} \qquad (3)$$

$\lambda$ denotes the signal wavelength, and d denotes the distance between two adjacent array elements.
The downlink channel from the BS to the UE may be expressed as below.

$$h = \sum_{\ell \in S_c} g_{c\ell} b(\theta_\ell) \in C^{N_{B1}} \qquad (4)$$

$g_{c\ell}$ and $\theta_\ell$ denote the gain of the transmission path passing through the $\ell$-th scatterer in the downlink channel and Angle of Departure passing through the $\ell$-th scatterer in the downlink channel, respectively.
As can be seen from equation (1), when the BS performs estimation on the angle $\theta_i$ of the surrounding scatterer, the BS obtains the estimation of $b(\theta_\ell)$. Therefore, based on equation (4), the reconstruction of the full downlink channel $h \in C^{N_{B1}}$ may be transformed into the sensing of the channel spatial basis $b(\theta_\ell)$ and the recovery of $g_{c\ell}$ through structural decomposition. In a large-scale antenna system, the number of scatterers |S| is usually less than the number of transmit antennas of the BS $N_{B1}$. Therefore, the preceding design reduces the number of parameters to be estimated/reconstructed in the UE downlink channel, thereby achieving the purpose of reducing the downlink reference signal and uplink feedback overhead of channel reconstruction.
In an embodiment, the echo signal received by the BS may be expressed as below.

$$Y_{st} = H_s X_t + Z_{st} \in C^{N_{B2} \times L}, t = 1, \dots, T \qquad (5)$$

$Z_{st} \sim CN(0, Q_s)$ denotes the mean, which is usually equal to 0 and is additive Gaussian noise with a covariance of $Q_s$. Based on the received echo signal $Y_{st}$, the BS may estimate the angle information $\hat{\theta}_i$, $i \in S$ of the surrounding scatterer using an angle estimation algorithm such as Multiple Signal Classification (MUSIC).
In an embodiment, the reference signal received by the BS includes the PMI and CQI.
The ISAC signal $y_{ct} \in C^L$ received by the UE is as below.

$$y_{ct}^H = h^H X_t + z_{ct}, t = 1, \dots, T. \qquad (6)$$

$z_{ct} \sim CN(0, Q_c)$ denotes the mean, which is usually equal to 0 and is additive Gaussian noise with a covariance of $Q_c$. The effective channel estimation obtained by the UE through a channel estimation algorithm (such as linear minimum mean square error (LMMSE) estimation) is as below.

$$\hat{h}_t = W_t^H h + e_t \qquad (7)$$

et denotes the channel estimation error. The PMI and CQI calculated by the UE based on the effective channel estimation $\hat{h}_t$ and the codebook U are denoted as below.

$$j_t^* = \mathrm{argmax}_{j \in U} \left| u_j^H \hat{h}_t \right|, t = 1, \dots, T \qquad (8)$$

$$q_t = \left| u_{j_t^*}^H \hat{h}_t \right|^2, t = 1, \dots, T \qquad (9)$$

The UE performs quantization on the CQI to obtain $\hat{q}_t$ and feeds back the PMI and quantized CQI to the BS via the uplink.

In S260, channel reconstruction is performed according to the echo signal and the reference signal.

Assuming that the current number of transmissions of the ISAC signal and the current number of feedbacks of the reference signal are both equal to t and t is a positive integer less than or equal to T, then the method for performing the channel reconstruction according to the echo signal and the reference signal in S260 may include the following.

1. Parameter estimation is performed on an echo signal set so that angle information of the scatterer is obtained, where the echo signal set includes an echo signal corresponding to an ISAC signal transmitted for the t-th time or includes all echo signals corresponding to all ISAC signals transmitted from the first time to the t-th time.

When the angle information of the scatterer is estimated, parameter estimation may be performed based on the echo signal $Y_{st}$ corresponding to the ISAC signal transmitted for the t-th time or may be performed based on all echo signals $[Y_{s1}, \dots, Y_{st}]$ corresponding to all ISAC signals transmitted from the first time to the t-th time. When parameter estimation is performed using the echo signal $Y_{st}$ corresponding to the ISAC signal transmitted for the t-th time, the computational complexity can be reduced and the efficiency of channel reconstruction can be improved. When parameter estimation is performed using all echo signals $[Y_{s1}, \dots, Y_{st}]$ corresponding to all ISAC signals transmitted from the first time to the t-th time, the estimation accuracy can be improved.

2. A spatial basis matrix is constructed according to the angle information of the scatterer.

According to the angle information $\hat{\theta}_i$, $i \in S$ of the scatterer, the constructed spatial basis matrix of the downlink communication channel may be expressed as below.

$$B(\hat{\theta}) \triangleq \left[ b(\hat{\theta}_1), \dots, b(\hat{\theta}_{|S|}) \right] \in C^{N_{B_1} \times |S|} \qquad (10)$$

3. The channel reconstruction is performed according to the spatial basis matrix and a reference signal set, where the reference signal set includes a reference signal fed back by the second communication node for the *t*-th time or includes all reference signals fed back by the second communication node from the first time to the t-th time.

When the channel reconstruction is performed, the channel reconstruction may be performed based on the reference signal fed back by the UE for the t-th time or may be performed based on all reference signals fed back by the UE from the first time to the t-th time. When the channel reconstruction is performed using the reference signal fed back by the UE for the *t*-th time, the computational complexity can be reduced and the efficiency of channel reconstruction can be improved. When the channel reconstruction is performed using all reference signals fed back by the UE from the first time to the t-th time, the estimation accuracy can be improved.

For example, the case where the channel reconstruction is performed according to the spatial basis matrix and all reference signals fed back by the UE from the first time to the t-th time is used as an example, and the BS may construct the channel reconstruction problem below.

$$\min_{g \in C^{|S|}} f(g) = \sum_{k=1}^{t} \left( \hat{q}_t - \left| u_{j_t^*}^H W_k^H B(\hat{\theta}) g \right|^2 \right)^2 + \alpha \|g\|_1 \qquad (11)$$

$g \in C^{|S|}$ is solved so that the reconstructed downlink channel $\hat{h} = B(\hat{\theta})g$ is obtained.

In an embodiment, $g \in C^{|S|}$ is solved in a proximal gradient descent (PGD) method and includes operations a, b, c, d, and e.

In operation a, the matrix $M = [m_1, \dots, m_t]$ is constructed, where $m_k = B(\hat{\theta})^H W_t u_{j_k^*}$, the initialization iteration index iter = 0, the initialization $g^{(iter)}$ is the maximum eigenvector of the matrix $M \mathrm{diag}(\{\hat{q}_k\}_{k=1}^t) M^H$, the initialization iteration step length $\beta > 0$, and the maximum number of iterations is $i_{max}$.

In operation b, $g^{(iter+1)}$ is updated using $g^{(iter+1)} \leftarrow prox_{\alpha f_2}(g^{(iter)} - \beta \nabla f_1(g^{(iter)}))$.

$\nabla f_1(g^{(iter)})$ corresponds to the gradient of
$$f_1\left(\mathbf{g}^{(iter)}\right) = \sum_{k=1}^{t}\left(\hat{q}_t - \left|\mathbf{u}_{jt}^{H*}\mathbf{W}_k^{H}\mathbf{B}(\hat{\theta})\mathbf{g}\right|^2\right)^2$$
and is expressed as below.

$$\nabla f_1(g) = \sum_{k=1}^{t}(-4\hat{q}_k m_k m_k^{H} g + 4\left|m_k^{H} g\right|^2 m_k m_k^{H} g).$$

$prox_{\alpha f_2}(\cdot)$ denotes the neighboring operator of $f_2(g) = \|g\|_1$ and is expresed as below.

$$prox_{\alpha f_2}(g) = \left[prox_{\alpha f_2}(g_1), \ldots, prox_{\alpha f_2}(g_{|S|})\right]^{T}.$$

$$prox_{\alpha f_2}(g_i) = \left(g_i - \alpha\frac{g_i}{|g_i|}\right)I_\alpha(g_i)$$
. When $|g_i| > \alpha$, $I_\alpha(g_i) = 1$, otherwise $I_\alpha(g_i) = 0$.

In operation c, the iteration index iter = iter + 1 is updated.

In operation d, operations b and c are repeated until iter = $i_{max}$.

In operation e, $g^{(imax)}$ is outputted as the approximate solution of equation (11).

In the present disclosure, the high-dimensional downlink channel is structurally decomposed into the product of the spatial basis matrix and the low-dimensional unknown parameter vector so that the reconstruction of the downlink channel is converted into the solution of the low-dimensional parameter vector, thereby reducing the number of feedbacks of the channel estimation, PMI, and CQI and reducing the reference signal and feedback overhead. At the same time, the ISAC signal is used to actively sense the transmission environment to construct the channel spatial basis matrix without the need to use the real-time feedback/historical CSI data of surrounding users, and the UE does not need to send a reference signal for uplink channel estimation, thereby eliminating the dependence of channel reconstruction on the CSI data of surrounding users and greatly expanding the applicable scenarios. In addition, the integrated design achieves dual sensing of scatterers around the BS and scatterers on the downlink transmission path of the specific UE using one ISAC signal, a dedicated radar device does not need to be installed on the BS, and major changes do not need to be made to the UE feedback mechanism so that the expensive radar device does not need to be introduced, which saves costs and has a great engineering significance.

In S270, whether t is less than T is determined. If t is less than T, t = t + 1 and S220 is performed. If t is not less than T, the process ends.

The preceding embodiments are all described by using the example in which the UE includes one antenna and the reference signal includes one PMI and one CQI. In an embodiment, S210 to S270 above may also be applied to a scenario where the UE includes multiple antennas. It is assumed that the UE includes $N_u$ antennas, $N_u > 1$, the corresponding channel is expressed as H = $[h_1, \ldots, h_{N_u}] \in C^{NB1 \times N_u}$, and $h_u \in C^{NB1}$, u = 1, ..., $N_u$ corresponds to the channel from the BS to the u-th antenna of the UE. The following two manners may be included.

In the first manner, the reference signal includes $N_u$ PMIs and $N_u$ CQIs, that is, the UE feeds back $N_u$ PMIs and $N_u$ CQIs each time. In this case, the reconstructed object is channel H.

Accordingly, through estimation, the UE obtains the effective channels $\hat{h}_{tu} \in C^{NB1}$, u = 1, ..., $N_u$ on the antennas, calculates the corresponding $j_{tu}^{*}$ and $q_{tu}$ based on $\hat{h}_{tu}$, and feeds back $j_{tu}^{*}$ and $\hat{q}_{tu}$ to the BS.

The constructed channel reconstruction problem (that is, equation (11)) in S270 becomes the following.

$$\min_{g_1,\ldots,g_{N_u} \in C^{|S|}} f\left(g_1, \ldots, g_{N_u}\right) = \sum_{k=1}^{t}\sum_{u=1}^{N_u}\left(\hat{q}_{tu} - \left|\mathbf{u}_{jtu}^{H*}\mathbf{W}_k^{H}\mathbf{B}(\hat{\theta})g_u\right|^2\right)^2 + \alpha\|g_u\|_1.$$

Other operations remain unchanged.

In the second manner, the reference signal includes one PMI and one CQI, that is, the UE feeds back one PMI and one CQI each time. In this case, the reconstructed object is the main direction of channel H (that is, the direction corresponding to the main eigenvector of the covariance matrix of H).

Accordingly, the UE combines the effective channels $\hat{h}_{tu} \in C^{NB1}$, u = 1, ..., $N_u$ obtained through estimation into the channel matrix $\hat{H}_t = [\hat{h}_{tu}, \ldots, \hat{h}_{tN_u}]$.

The calculation of the PMI is updated as below.

$$j_t^* = \text{argmax}_{j \in U} \left| u_j^H \hat{H}_t \hat{H}_t^H u_j \right|, t = 1, \dots, T.$$

The calculation of the CQI is updated as below.

$$q_t = \left| u_{j_t^*}^H \hat{H}_t \hat{H}_t^H u_{j_t^*} \right|^2, t = 1, \dots, T.$$

Other operations remain unchanged.

In the present disclosure, with the deployment of large-scale antenna arrays, the allocation of high-frequency spectra, and the application of high-frequency technologies such as millimeter waves, the increase in array size and bandwidth greatly enhances the resolutions of the channels in terms of the angle and delay domains for the BS. On the one hand, due to the weakening of the diffraction effects of high-frequency signals, the number of resolvable paths that form the downlink channel from the BS to the UE is usually much less than the channel dimensions (depending on the number of antennas). Therefore, structural decomposition and reconstruction of the channel are conducive to reducing the feedback overhead of the downlink CSI. On the other hand, due to the enhanced sensing capability of the BS, the ISAC design is performed on the BS so that the sensing of the surrounding transmission environment is obtained to form the estimation of the channel space, the selection and weighting of the spatial bases of the channel after structural decomposition are achieved in conjunction with a small number of feedbacks from the UE, and finally, the BS can actively sense the channel structure, thereby achieving high-accuracy channel reconstruction with low feedback overhead of the UE.

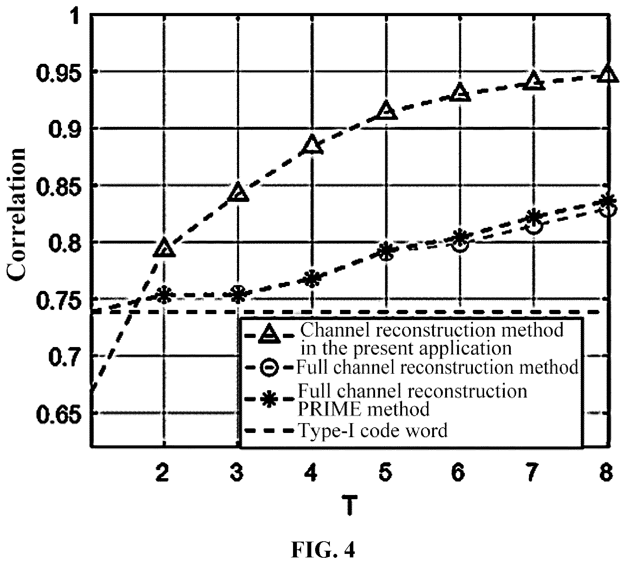

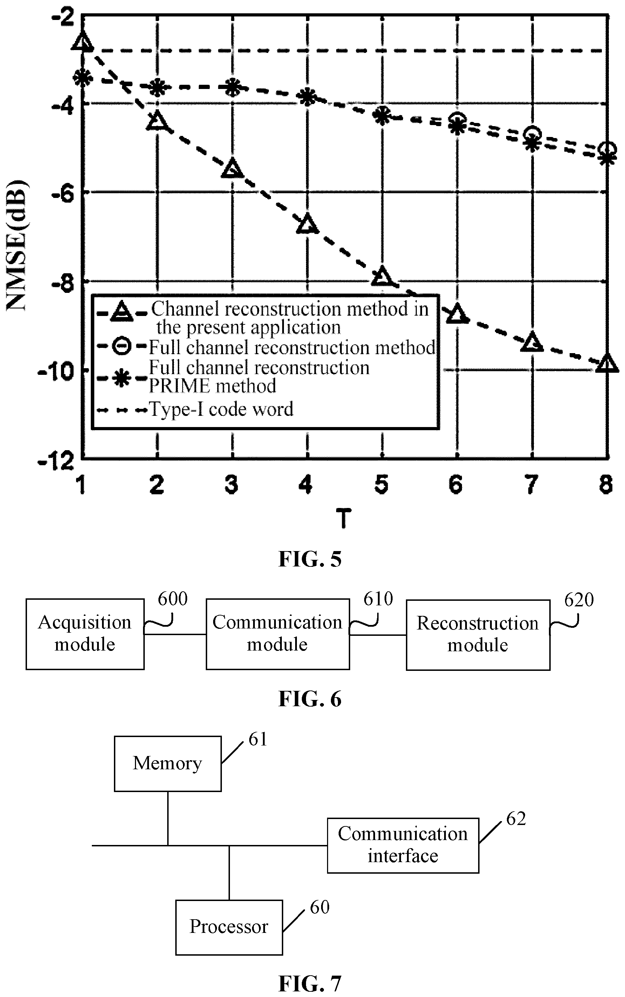

FIG. 4 is a correlation comparison diagram of three channel reconstruction methods according to an embodiment. FIG. 5 is a comparison diagram of NMSEs with common phase rotation of three channel reconstruction methods according to an embodiment. As shown in FIGS. 4 and 5, comparing the channel reconstruction method of the present disclosure with the full channel reconstruction method based on the PMI and CQI feedback and the full channel reconstruction PRIME method based on the PMI and CQI feedback, in the channel reconstruction method of the present disclosure, the accuracy of the reconstructed channel can be quickly increased as the number of transmissions of the ISAC signal increases; at the same time, when the ISAC signals are sent for multiple times (that is, T > 1), the channel reconstruction method of the present disclosure has the best reconstruction performance.

The present disclosure provides a channel reconstruction method so that the active sensing of the channel structure can be achieved through the ISAC design on the BS, and the high-accuracy CSI reconstruction of the downlink from the BS to the UE can be achieved with the assistance of a small amount of information fed back by the UE (including, but not limited to, the CSI based on low-accuracy code words, the transmission path gain, or the like). The ISAC design is performed at the BS side so that the sensing of the transmission environment and the estimation of the scatterer parameter are achieved by transmitting the ISAC signal and receiving the echo signal, and channel space estimation is constructed on this basis; at the same time, the UE performs estimation on the equivalent downlink CSI based on the received ISAC signal, quantizes the estimation amount using the low-accuracy Type I codebook with low feedback overhead, and then transmits the PMI and CQI back to the BS; the BS performs structural screening and weighting on the spatial bases based on the feedback information, thereby achieving high-accuracy reconstruction of the downlink CSI.

FIG. 6 is a diagram illustrating the structure of a channel reconstruction apparatus according to an embodiment. The apparatus may be configured in a communication node. As shown in FIG. 6, the apparatus includes an acquisition module 600, a communication module 610, and a reconstruction module 620.

The acquisition module 600 is configured to acquire an ISAC signal. The communication module 610 is configured to transmit the ISAC signal and receive an echo signal and a reference signal, where the echo signal is a signal scattered by a scatterer based on the ISAC signal, and the reference signal is a signal fed back by a second communication node based on the ISAC signal. The reconstruction module 620 is configured to perform channel reconstruction according to the echo signal and the reference signal.

The channel reconstruction apparatus provided in this embodiment may implement the channel reconstruction method in the preceding embodiments. The channel reconstruction apparatus provided in this embodiment has implementation principles and technical effects that are similar to those of the preceding embodiments, and the details are not repeated here.

In an embodiment, the maximum number of transmissions of the ISAC signal and the maximum number of feedbacks of the reference signal are both equal to T, where T is a positive integer.

In an embodiment, the acquisition module 600 is configured to generate an orthogonal transmit signal and precode the orthogonal transmit signal using a precoding matrix to obtain the ISAC signal.

In an embodiment, different precoding matrices are used for ISAC signals with different numbers of transmissions.

In an embodiment, the precoding matrix is constructed using a random complex Gaussian matrix or a DFT matrix.

In an embodiment, the number of frame symbols of the ISAC signal is greater than or equal to the number of transmit antennas of the first communication node.

In an embodiment, the current number of transmissions of the ISAC signal and the current number of feedbacks of the reference signal are both equal to t and t is a positive integer less than or equal to T; the reconstruction module 620 is configured to perform parameter estimation on an echo signal set to obtain angle information of the scatterer, where the echo signal set includes an echo signal corresponding to an ISAC signal transmitted for the *t*-th time or includes all echo signals corresponding to all ISAC signals transmitted from the first time to the t-th time; construct a spatial basis matrix according to the angle information of the scatterer; and perform the channel reconstruction according to the spatial basis matrix and a reference signal set, where the reference signal set includes a reference signal fed back by the second communication node for the *t*-th time or includes all reference signals fed back by the second communication node from the first time to the *t*-th time.

In an embodiment, the reference signal includes a PMI and a CQI.

In an embodiment, the second communication node includes one antenna, and the reference signal includes one PMI and one CQI; or the second communication node includes $N_u$ antennas, and the reference signal includes one PMI and one CQI or the reference signal includes $N_u$ PMIs and $N_u$ CQIs, where $N_u$ is a positive integer greater than 1.

An embodiment of the present disclosure further provides a communication node. The communication node includes a processor configured to perform the method provided in any embodiment of the present disclosure when executing a computer program. The communication node may be an access network device provided in any embodiment of the present disclosure, which is not limited in the present disclosure.

For example, the following embodiment provides a diagram illustrating the structure of a BS as a communication node.

FIG. 7 is a diagram illustrating the structure of a BS according to an embodiment. As shown in FIG. 7, the BS includes a processor 60, a memory 61, and a communication interface 62. One or more processors 60 may be provided in the BS, and one processor 60 is used as an example in FIG. 7. The processor 60, the memory 61, and the communication interface 62 that are in the BS may be connected via a bus or in other manners. In FIG. 7, the connection via the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the method of the embodiments of the present disclosure. The processor 60 runs the software programs, instructions, and modules stored in the memory 61 to execute at least one of function applications and data processing of the BS, that is, to perform the preceding method.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a nonvolatile memory such as at least one magnetic disk memory, a flash memory, or another nonvolatile solid-state memory. In some examples, the memory 61 may include memories that are remotely disposed with respect to the processor 60. These remote memories may be connected to the BS via a network. Examples of the preceding network include, but are not limited to, the Internet, an intranet, a network, a mobile communication network, and a combination thereof.

The communication interface 62 may be configured to receive and send data.

An embodiment of the present disclosure further provides a computer-readable storage medium. The computer-readable storage medium is configured to store a computer program which, when executed by a processor, causes the processor to perform the method provided in any embodiment of the present disclosure.

A computer storage medium in the embodiment of the present disclosure may be one computer-readable medium or any combination of multiple computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory, or any suitable combination thereof. In the present disclosure, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, radio frequency (RF) and the like, or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term "user equipment" encompasses any suitable type of radio user device such as a mobile phone, a portable data processing apparatus, a portable web browser, or an in-vehicle mobile station.

Generally speaking, embodiments of the present disclosure may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present disclosure is not limited thereto.

Embodiments of the present disclosure may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present disclosure may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be of any type suitable to the local technical environment, such as, but is not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A channel reconstruction method, the method being applied to a first communication node and comprising:

   acquiring an integrated sensing and communication, ISAC, signal and transmitting the ISAC signal;
   receiving an echo signal and a reference signal, wherein the echo signal is a signal scattered by a scatterer based on the ISAC signal, and the reference signal is a signal fed back by a second communication node based on the ISAC signal; and
   performing channel reconstruction according to the echo signal and the reference signal.

2. The method of claim 1, wherein a maximum number of transmissions of the ISAC signal and a maximum number of feedbacks of the reference signal are both equal to T, and T is a positive integer.

3. The method of claim 2, wherein the acquiring the ISAC signal comprises:

   generating an orthogonal transmit signal; and
   precoding the orthogonal transmit signal using a precoding matrix to obtain the ISAC signal.

4. The method of claim 3, wherein different precoding matrices are used for ISAC signals with different numbers of transmissions.

5. The method of claim 3, wherein the precoding matrix is constructed using a random complex Gaussian matrix or a discrete Fourier transform, DFT, matrix.

6. The method of claim 1, wherein a number of frame symbols of the ISAC signal is greater than or equal to a number of transmit antennas of the first communication node.

7. The method of claim 2, wherein a current number of transmissions of the ISAC signal and a current number of feedbacks of the reference signal are both equal to t, and t is a positive integer less than or equal to T;
wherein the performing the channel reconstruction according to the echo signal and the reference signal comprises:

performing parameter estimation on an echo signal set to obtain angle information of the scatterer, wherein the echo signal set comprises an echo signal corresponding to an ISAC signal transmitted for a t-th time or comprises all echo signals corresponding to all ISAC signals transmitted from a first time to the t-th time;
constructing a spatial basis matrix according to the angle information of the scatterer; and
performing the channel reconstruction according to the spatial basis matrix and a reference signal set, wherein the reference signal set comprises a reference signal fed back by the second communication node for the t-th time or comprises all reference signals fed back by the second communication node from the first time to the t-th time.

8. The method of claim 7, wherein the reference signal comprises a precoding matrix indicator, PMI, and a channel quality indicator, CQI.

9. The method of claim 8, wherein

the second communication node comprises one antenna, and the reference signal comprises one PMI and one CQI; or
the second communication node comprises $N_u$ antennas, and the reference signal comprises one PMI and one CQI or the reference signal comprises $N_u$ PMIs and $N_u$ CQIs, and $N_u$ is a positive integer greater than 1.

10. A communication node comprising a processor configured to perform the channel reconstruction method of any one of claims 1 to 9 when executing a computer program.

11. A computer-readable storage medium configured to store a computer program which, when executed by a processor, causes the processor to perform the channel reconstruction method of any one of claims 1 to 9.

○     Scatterer

◄ – – ►     Sensing channel

———►     Downlink channel transmission path

**FIG. 1**

| Acquire an ISAC signal and transmit the ISAC signal | S110 |
| :---: | :---: |

| Receive an echo signal and a reference signal, where the echo signal is a signal scattered by a scatterer based on the ISAC signal, and the reference signal is a signal fed back by a second communication node based on the ISAC signal | S120 |
| :---: | :---: |

| Perform channel reconstruction according to the echo signal and the reference signal | S130 |
| :---: | :---: |

**FIG. 2**

The process starts

Set both the maximum number of transmissions of the ISAC signal and the maximum number of feedbacks of the reference signal to T, and set both the current number t of transmissions of the ISAC signal and the current number t of feedbacks of the reference signal to 1, where T is a positive integer — S210

Generate an orthogonal transmit signal — S220

Precode the orthogonal transmit signal using a precoding matrix to obtain the ISAC signal — S230

Transmit the ISAC signal — S240

Receive an echo signal and a reference signal, where the echo signal is a signal scattered by a scatterer based on the ISAC signal, and the reference signal is a signal fed back by a second communication node based on the ISAC signal — S250

Perform channel reconstruction according to the echo signal and the reference signal — S260

Set t to t + 1

Yes

Determine whether t is less than T — S270

No

The process ends

**FIG. 3**

FIG. 4

**FIG. 5**

**FIG. 6**

**FIG. 7**

**EP 4 583 420 A1**

## INTERNATIONAL SEARCH REPORT

| International application No. |
|---|
| **PCT/CN2023/091636** |

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

3GPP, CJFD, CNTXT, ENTXTC, VEN, WPABSC, IEEE: 信道, 信道估计, 信道建模, 支持, 重构, 注册, 4G, 5G, Channel, ISAC, LTE, NSA, Reconstruct+, estimat+, Modeling, Registrat+

### C. DOCUMENTS CONSIDERED TO BE RELEVANT

| Category* | Citation of document, with indication, where appropriate, of the relevant passages | Relevant to claim No. |
|---|---|---|
| Y | CN 114325679 A (SOUTH UNIVERSITY OF SCIENCE AND TECHNOLOGY et al.) 12 April 2022 (2022-04-12)<br>description, paragraphs [0003]-[0010] and [0026]-[0032] | 1-11 |
| Y | JIAO, Chunxu et al. "An Indoor mmWave Joint Radar and Communication System With Active Channel Perception"<br>*2018 IEEE International Conference on Communications (ICC),* 30 July 2018 (2018-07-30), Abstract, and Section III | 1-11 |
| A | WO 2022110923 A1 (HUAWEI TECHNOLOGIES CO., LTD.) 02 June 2022 (2022-06-02)<br>entire document | 1-11 |
| A | WO 2022021443 A1 (HUAWEI TECHNOLOGIES CO., LTD.) 03 February 2022 (2022-02-03)<br>entire document | 1-11 |
| A | WO 2022048497 A1 (ZTE CORP.) 10 March 2022 (2022-03-10)<br>entire document | 1-11 |
| A | US 2016164651 A1 (FACEBOOK, INC.) 09 June 2016 (2016-06-09)<br>entire document | 1-11 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 June 2023** | **21 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091636**

| Patent document cited in search report | | | Publication date (day/month/year) | Patent family member(s) | | | Publication date (day/month/year) |
|---|---|---|---|---|---|---|---|
| CN | 114325679 | A | 12 April 2022 | None | | | |
| WO | 2022110923 | A1 | 02 June 2022 | CN | 114584988 | A | 03 June 2022 |
| WO | 2022021443 | A1 | 03 February 2022 | CN | 115244864 | A | 25 October 2022 |
| WO | 2022048497 | A1 | 10 March 2022 | CN | 112019463 | A | 01 December 2020 |
| | | | | KR | 20230058714 | A | 03 May 2023 |
| US | 2016164651 | A1 | 09 June 2016 | None | | | |

Form PCT/ISA/210 (patent family annex) (July 2022)